# EUROPEAN PATENT APPLICATION

(11) **EP 1 278 358 A1**
(43) Date of publication of application: **22.01.2003**
(21) Application number: 01306130.4
(22) Date of filing: 17.07.2001
(51) Int. Cl.: H04M 11/02, H04M 3/533, H04M 3/48, H04M 3/487, H04M 11/04

(54) **Scheduled Emergency Callback and Outcall Service**

(71) Applicant: BRITISH TELECOMMUNICATIONS public limited company, London EC1A 7AJ (GB)
(72) Inventor: GLASSFORD, Robert John, Kesgrave, Ipswich IP4 2th (GB); MCCARTNEY, David John, Ipswich IP4 2TH (GB); GIFFORD, Maurice Merrick, Kesgrave, Ipswich IP5 1JZ (GB); SEAL, Christopher Henry, Tilehurst, Reading RG30 4EU (GB)

(57) **Abstract**

The present invention provides a service platform (8) responsive to a telephone request or data request from a user to capture a voice message (322), a destination contact node (316) and a call alert time (320). At the call alert time a call is made to the originator of the request (Fig.5) and in the absence of an appropriate response a call is placed (Fig.6) to the destination contact node and the captured voice message played. In the absence of an acknowledgement at the destination contact node (selected from a list provided in the request) or any response further contact attempts are made. Thus, users who may be embarrassed or otherwise reluctant to acknowledge participation in a potentially hazardous activity can establish a rescue request without requiring direct intervention unless the activity proved to be hazardous.

## Description

The present invention relates to telecommunications networks and more particularly to services provided thereon.

There is an increasing trend fro people to live more isolated lifestyles in a more independent fashion. This leads to an increasing number of small households in which a single person resides and/or in which elderly persons who wish to continue to live an independent existence in their homes are often the only people present.

There is also a tendency for individuals to interact less with immediate neighbours and social contacts and family tend to be more widely dispersed geographically. Thus, if a home accident occurs the likelihood is that the victim may lay undiscovered fro a considerable period due to a lack of contact with immediately local persons. Thus it may be considered wise to alert family or friends of intentions before embarking on potentially dangerous activities. Examples of potentially dangerous activities include climbing ladders to access roofs, clean windows, enter attics or carrying out repairs to electrical appliances, changing ceiling light bulbs and similar activities.

People can be reluctant to ask for help and may feel embarrassed if they are not in regular contact with neighbours to ask for assistance in carrying out a check on their well-being. The requester may also feel embarrassed if carrying out a particular activity which may be perceived as not having a significant risk associated with it.

Further, the person may be unwilling to place responsibility on another person and placing an onus on that person to check up on them later and such a request may give the impression that the requester is incapably of maintaining an independent lifestyle. Another concern of such persons may be that asking a friend or relative to check may burden that person with unnecessary responsibility or worry. This may be particularly appropriate where outdoor pursuits perceived as having a high risk associated with them are being undertaken by an individual where the call-out procedure in the event of non return at the appropriate time leads to worry of the responsibility of checking on the individuals welfare.

In summary, the service to be provided is particularly applicable to persons living on their own and/or in vulnerable situations who are not known to their immediate neighbours and/or do not have immediate neighbours and who are reluctant to ask a friend either because the apparent risk is low and it would be embarrassing to ask for a check or because the apparent risk is high and may cause unnecessary worry or unacceptable levels of responsibility upon the person asked.

According to the present invention there is provided a telecommunication service in which responsive to a customer request from a first customer processing means collects and stores a customer message from the caller together with at least one preferred contact node and a call back time, said processing means contacting the originating customer at the specified call back time to provide a prompt to the customer and, in the absence of an appropriate response causing an alert communication to the or the first of the at least one preferred contact node and, on acknowledgement, delivering the stored customer message to the called node.

The customer request may be by means of a telephone call or through data communication using a web page or an electronic mail facility. Alert messages may be delivered by way of a short messaging system to an appropriate message receiving node such as a mobile telephone or by e-mail to an e-mail account. if the delivered message is not to a service which provides a specific acknowledgement such as an answer from a called telephone number then the system may wait a pre=determined period of time for an acknowledgement and in the absence of such acknowledgement will try the subsequent telephone or e-mail contact node.

A plurality of telephone numbers may be specified each of which is called in turn until an answer and an acceptable response are received. In the absence of a reply from the or any of the called telephone line the processing means may cause a call to be established to an appropriate emergency service. The message recorded may be supplemented on delivery with further information including for example the originating callers telephone number and other information derived there from possibly including address or locational information determined by triangulation on a cellular transmission for example.

A telecommunications network and a service based thereon will now be described by way of example only with reference it to the accompanying drawings of which:
Figure 1 is a block schematic representation of a telephone network including a service platform:
Figure 2 is a block schematic diagram of the service platform of Figure 1; and
Figures 3 to 6 are flow charts of a program running in the service platform of figure 2.

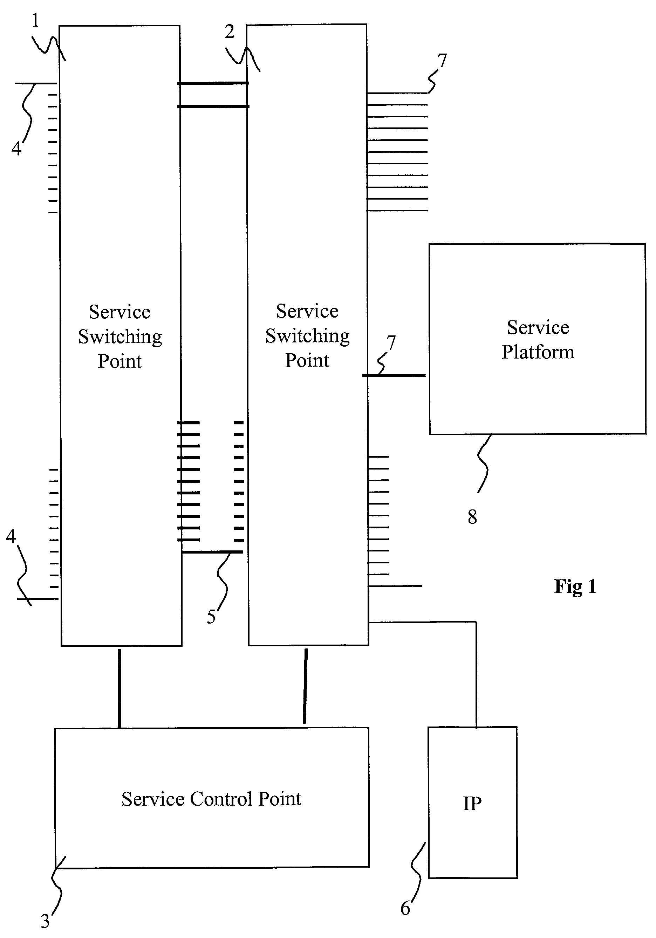

Referring to Figure 1, the public switched telephone network (PSTN) is pair of service switching points (SSPs) 1 and 2 forming part of a so-called intelligent network. SSPs are fully interconnectable to allow customer connections 4 to be connected through the network to any other customer connection 4 and to service platforms 8 (only one of which is shown) and intelligent peripherals, for example, (not shown).

A SSP is connected to other SSPs by high capacity trunk connections 5.

SSPs include computerised control means programmed to recognise from dialled codes a switching route through the network to other facilities. The program control means may also include trigger points responsive to specifically dialled codes to cause them to transmit to a service control point (SCP) a message containing, for example the digits dialled, the origin of the call (calling line identity (CLI)) and whether the call is terminating or originating, for example, to enable the (SCP) to determine from that data and other data such as the time of day or day of week how the call is to be handled. The SCP then returns a message to the originating SSP to cause the control means of that SSP to handle the call in a particular manner, for example by retrieving further digits, connection of an intelligent peripheral or to a completion node which may be, for example, the service platform 8.

As thus far described the network is known, the present invention providing a new service platform type implementing a new telecommunications service on the PSTN.

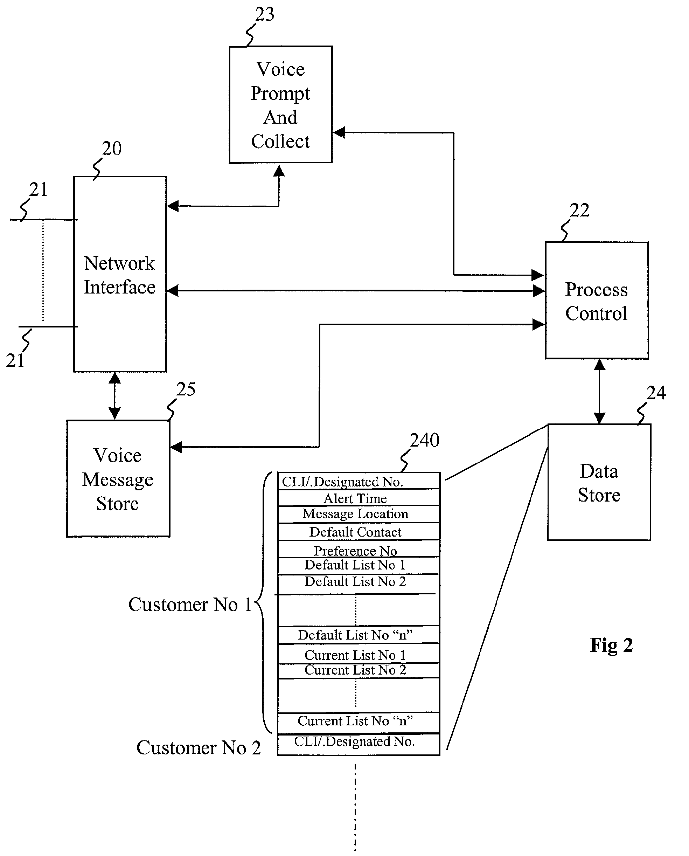

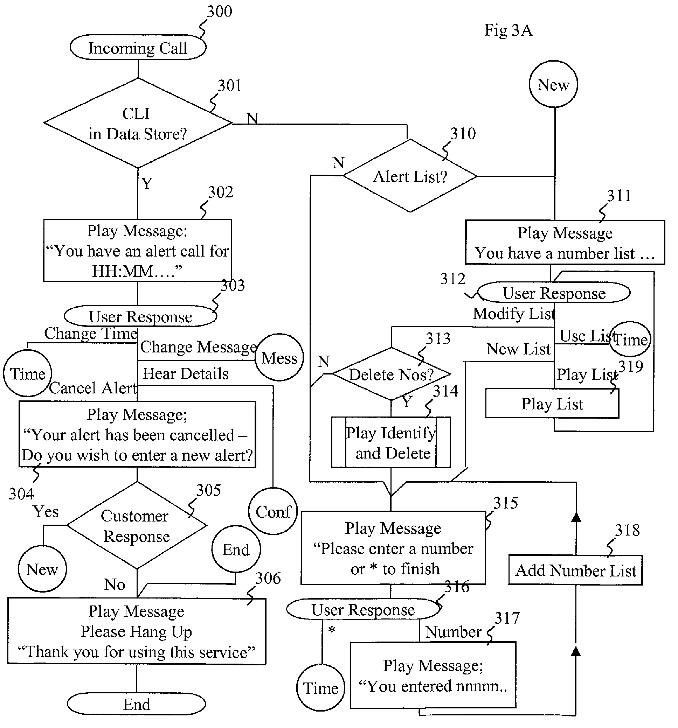

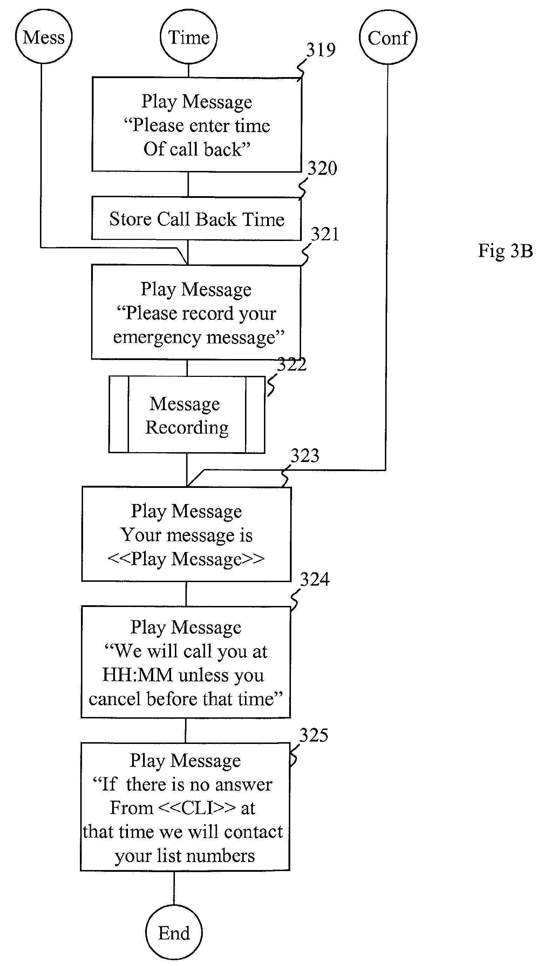

Referring now also to Figure 2, the service platform 8 in the present invention comprises, for example, a network interface 20 which is linked into nodes of the network in known manner at connections 21. Thus each of the connections 21 represents a connection to one of lines 7, for example, of the SSP of Figure 2 and, when a specific service code is input by a customer of one of the lines 4, for example, the SCP 3 will cause the control means of the SSP 1 to effect a connection via trunk 5 to the SSP 2 and then to one of the nodes 7 to effect a connection to the input connections 21 of the network interface 20 of the service platform. Process control unit (PCU) 22 responds to inputs through the network interface 20 customer connection 4 as hereinafter described with reference to Figures 3 to 6. The PCU 22 has access to voice prompt and collect apparatus 23 to enable communication with a calling customer, a data store 24 to enable details of the call and service to be provided to be stored and a voice message store 25 to enable either predetermined or input messages to be stored and used.

A break out of typical data stored in the data store 24 in respect of a telephone call is shown as block 240 the use of which will become apparent from the following description of the process operated in respect of calls to the service by the PCU 22.

Referring also now to Figure 3, when a call is placed by one of the customers on, for example, lines 4 of Figure 1 through the switching network to the service platform 8, a (PCU) 22 receives an indication of the connection from a network interface 20. The network interface 20 allows a multiplicity of calls to be handled by the PCU 22 and the other apparatus as appropriate. Recognising the presence of an incoming call the PCU 22 checks data in a data store 24 to determine whether there is an existing caller alert associated with that CLI. This processor 301 enables users to cancel an alert or to amend it once the potential for an emergency situation has passed.

Assuming that there is such a request present and an associated alert time is also stored as indicated in the data information block 240 of Figure 2 then the PCU 22 causes the network interface to affect a connection to voice prompt and collect function 23 at step 302 and causes a voice message to be played of the form "you have an alert call for (alert time)". The user is then also given a series of options such as "key 1 to change alert time, key 2 to change your message, key 3 to hear details of your message or key * to cancel the alert". The prompt and collect unit 23 now awaits a response form the caller to determine what action should be taken. This is indicated at step 303 but should the caller not enter any response or hangs up without entering a response then the system will automatically skip to the end box without effecting any change to the alert or alert time as sorted in the data store 24.

If the user chooses to cancel the alert by keying * then the PCU 22 on receipt of the collected digit from the voice prompt and collect unit 23 causes a further message to be transmitted along the lines of "your alert has been cancelled do you wish to enter a new alert key 1 to enter a new alert or key * to leave the service?". Once again the voice prompt and collect unit 23 awaits a customer response to indicate action to be taken. Again, if the customer makes not response or hangs up then the service skips to the end having cancelled the alert in accordance with the users wishes.

It will be appreciated that, while not shown as a separate step, a confirmation of the user's instructions may be requested or required before the call is removed from the data store by removing the alert time or by setting it to a particular value such a 999.

Assuming that the call has been cancelled and the customer does not wish to enter a new voice message, then the system proceeds at step 306 to play a message of the form, for example, "please hang up, thank you for using this service" through the voice prompt and collect unit 23.

It will be appreciated that if the service is being provided by a network operator, for example, the voice prompt and collect unit 23 may be integral with the network, for example, in the form of an intelligent peripheral 6 responsive to messages from the PCU 22 in association with the SSP control means to cause connection of the call to the intelligent peripheral and effect collection of data therein for transmission to the PCU 22 based on the network itself rather than in a separate platform.

Returning now to step 301, assuming that no alert is present in the data store for the identified CLI, then at step 310 a check is made to determine whether an alert list, or a preferred set of called numbers is present for the CLI.

If such a list exists then at step 311 the PCU 22 cause the voice prompt and collect unit 23 to be connected through the network interface 24 to the appropriate calling line and causes a message to be played along the lines of "you have a number list which you may wish to use for this call. Key 1 to modify the list, key 2 to use the list, key 3 to create a new list or key 4 to play the list". Upon user response, for example requiring that the list be played, then the relevant data is transferred from the data stored 24 to the voice prompt and collect unit 23 and the list is played to the user as indicated at step 313. At the end of playing the list, the options may be repeated and the user returned to step 312. It should be noted that if the caller hangs up at any time prior to completing all of the step necessary to establish a required alert, the system will not set up a responsive call. However, there may be circumstances in which the system is pre-programmed for one or more CLIs to effect an automatic emergency call in the event that the particular user does not complete transmission of all of the details.

Returning now to the user response at step 312, assuming now that the user requests an opportunity to modify the list, then at 313 a voice message is transmitted enquiring of the user as to whether he wishes to delete numbers from the list and if so as indicated in 314 a play identify and delete function is carried out under the control of the PCU 22 and the voice prompt and collect unit 23 whereby each number is played to the user in turn and the user may key a delete or skip instruction in the form of for example # to delete and * to skip to the next number in the list.

Once the list has been completely played or skipped and necessary amendments to the number to be called made, then the system process to step 315 which is also the point of entry if the user wishes to complete a new list or if, as indicated at step 310, no such list existed. If the user has requested a completely new list, then all of the telephone numbers in association with the particular CLI may be erased or alternatively an entirely new list may be linked to the LCI for a particular call.

At step 315 the PCU 22 causes the voice prompt and collect unit 23 to play a message such as "please enter a number followed by # or * to finish".

After the user response has been received by the voice prompt and collect unit 23 it is transferred by way of the PCU 22 to the data store 24 possibly with a validity check to determine that the number keyed is a valid network contact.

At step 317, the PCU 22 causes the voice prompt and collect unit 23 to transmit the stored number in form of "you entered <<number>>, press * to confirm or # to cancel". Assuming that the user keys confirmation then the number is added to the number list whether as an additional number to a previously stored list or as a number in a new list and the system then returns after step 318 to step 315 to invite the user to enter further numbers. If, at step 316, the user response is an * to indicate completion of list entry, the PCU 22 having checked that at least one telephone number is present in the data store 24 in association with the caller's CLI, steps to invite the caller to enter a time as indicated at step 319.

Note also that the box 319 may be skipped to from the user response at step 303 and follows exactly the same form regardless of whether this is a time change by the user or an entirely new message. Thus at step 319 the voice prompt and collect unit 23 is caused to transmit a message of the form "please enter time of call back" and expects a response from the user normally in the form of HH:MM which instruction will be included in the voice message. It should be noted that the caller may be given the opportunity to select a day if the alert call is for a different period ie if the caller is likely to be absent for several days prior to requiring assistance, for example, if taking a sailing trip for some distance. Once the caller has responded to the time at which a call back should be made, then the information received is transmitted from the voice prompt and collect unit 23 to the PCU 22 which will carry out a sanity check to ensure that the time entered is valid and is in the future. Once the sanity check is completed then the PCU 22 causes the alert time to be associated with the CLI in the data store 24 and then determines from its own records a location in a voice message store 25 at which a message can be stored for transmission. The message location is now associated with the CLI record and alert time in the data store. Thus, after storing the call time at step 320, at step 321 the voice prompt and collect unit 23 is cause to transmit a further message of the form "please record your emergency message, key # on completion of recording".

The CPU 22 now causes the voice message store 25 to receive the subsequent voice message through the network interface and to store it in the location selected. This step is shown at 322.

Once the message has been recorded and the user has keyed # then the voice prompt and collect unit 23 is again connected to the customer and plays a message of the form "your message is ..." and then the PCU 22 cause the voice message store 25 to transmit the recorded message.

Subsequent to transmitting the message and receiving confirmation that the user accepts that message (step not shown), at step 324 the voice prompt and collect unit 23 is caused to transmit a message of the form "se will call you at <<HH:MM>> (the alert time held in the data store 24) unless you call in to cancel before that time.".

At step 325 a message of the form "if there is no answer from (CLI) at that time we will contact your list numbers.". The system may now skip to box 306 to play the message "please hang up, thank you for using this service" as previously described.

Returning to step 303, it will be noted that if the caller chooses only to change the message and not the alert time, the system will skip to box 321 and the subsequent program. If the customer wishes to hear details as indicated by the response given at step 303 then the flow chart will skip to box 323 again giving the customer the option of changing the message if required.

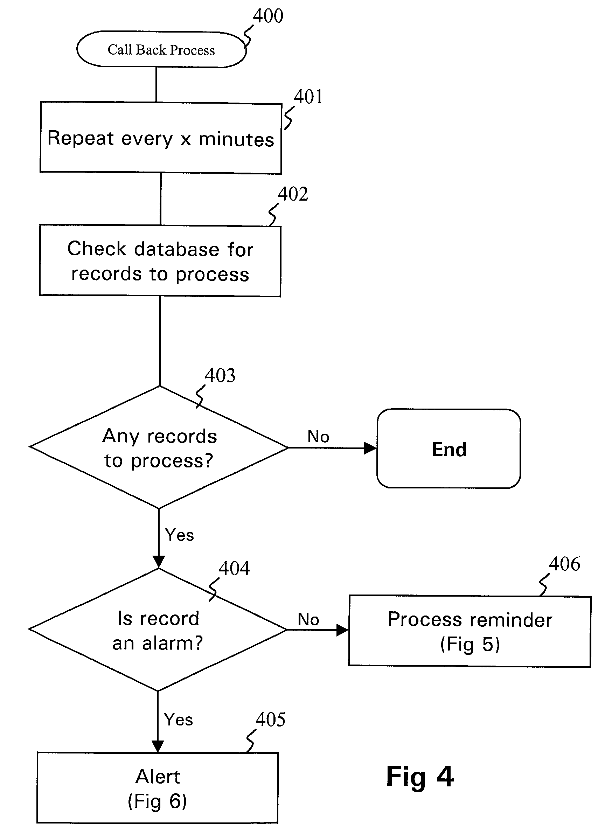

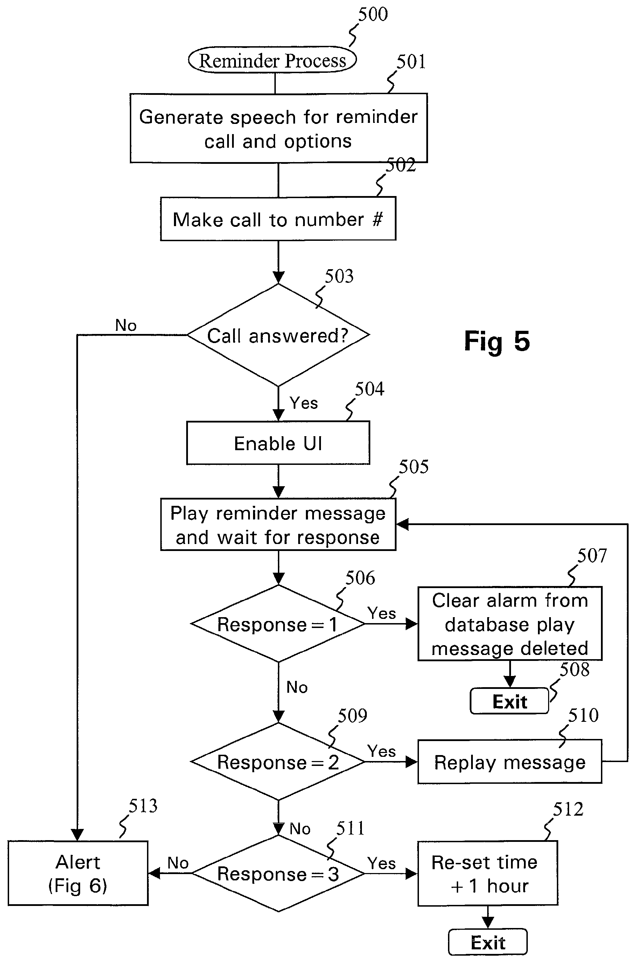

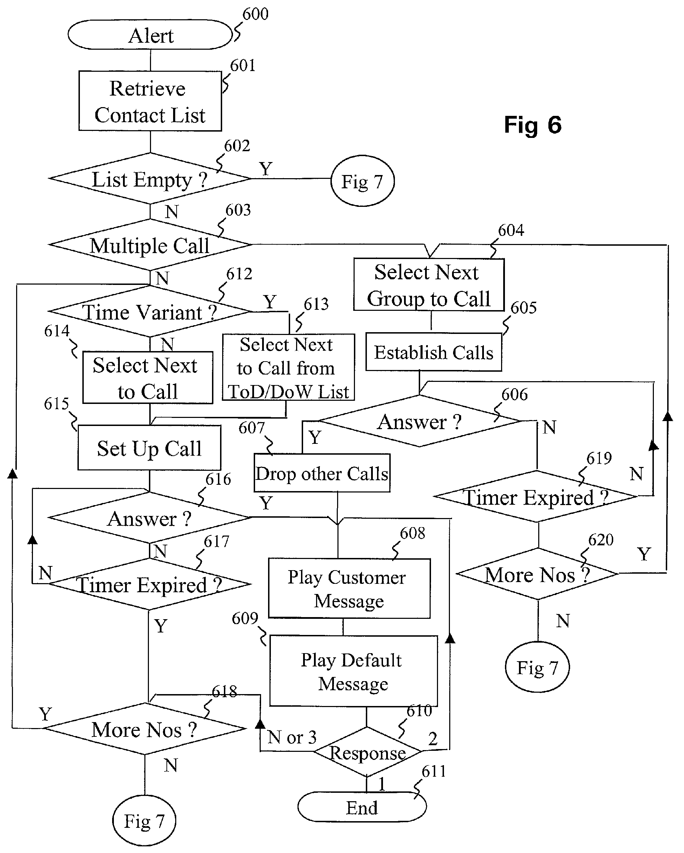

Turning now to Figure 4, the call back process 400 runs as a background function in the PCU 22 and repeats at periodic intervals as indicated at step 401. The repeat function may be on every minute, for example, in which the PCU 22 scans each block of records 240 in the data store 24 to determine whether the alert time stored therein is equal or exceed by the current time. Having checked the data based at step 402, to determine if there are records to process then, as indicated at step 403, if no such records or files are found the program revert to its quiescent state. If as indicated at 403, an alert time message is present, then a check is carried out to determine whether the stored record is for an immediate alarm, unless cancelled, or for a reminder call prior to cancellation. As indicated at step 405, if an immediate alarm is to occur then the alert function of Figure 6 is activated. If the record is not an alarm but a call back request then, as indicated at step 406, the reminder process of Figure 5 is carried out.

Accordingly, now turning to Figure 5 while still referring to Figures 1 and 2, the reminder process indicated at step 500 begins at step 501 by preparing the voice prompt and collect unit 23 to transmit a reminder call and option information.

The CLI of the caller (or if the caller has requested use of another number on entering then that number) is recovered from the data store 24 in respect of the appropriate block 240 for which the alert time has been reached. The network interface 20 now causes a call to be placed through the network to the originating caller's telephone number and monitors for an answer to the call. If the call is not answered within a predetermined period as monitored at step 503, then the alert function of Figure 6 is activated. Assuming now that the call is answered at step 503, at step 504 the voice prompt and collect unit 23 is initially connected to the network interface 20 to enable transmission of a reminder message through the network to the identified calling number.

Thus the voice prompt and collect unit 23 is caused to transmit a reminder message, for example of the form "you requested call back at this time to remind you to cancel an emergency message, key 1 to acknowledge cancellation of the message, key 2 to hear this message again, key 3 to defer the call by one hour, key 4 to enter a new call back time.". Assuming that the message transmitted at step 505 results in one of the designated responses then if the users response is 1 (and possibly a confirmation by keying a further different digit) the alarm time is deleted from the data store 24 in respect of the particular block 240 associated with this CLI and the message "please hang up, thank you for using this service" may now be transmitted prior to leaving the process, this indicated at steps 506, 507 and 508 of Figure 5. If the response is 2 as indicated at step 509, then the replay message request is acknowledged and the transmitted message is sent again at step 505 looking for an appropriate response.

A check may be carried out as to the number of times on which the message replay is requested so that in the event of an inappropriate number of repeats being required an early alert may be made.

Finally a check for response 3 or 4 may be carried out so that either a short term time adjustment, for example of say one hour, may be made to the alert time or the caller may be returned on keying digit 4 to the stored call back time function of Figure 3 at step 319 etc.

If an invalid or no response is received within a predetermined period after the call is answered, then again the PCU 22 skips to the alert condition of Figure 6.

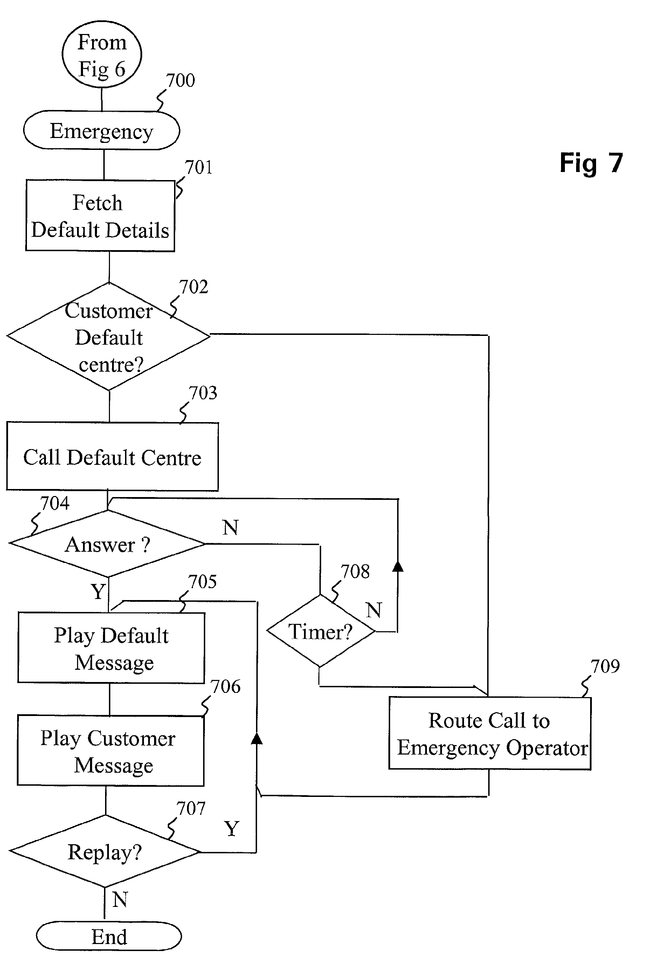

Turning now to Figure 6, when the alert process 600 starts in the PCU 22 the contact list is retrieved from the appropriate block 240 in the data store 24 and a check made to determine if the contact list is in practice empty or contains only invalid numbers. Thus, after retrieving the contact list at step 601, the comparison at step 602 determines whether the list is empty and if so an immediate emergency process is commenced as described hereinafter for Figure 7. Various functions may be associated with the call back list of block 240 which for simplicity were not described hereinbefore in respect of the call to establish the service. For example, the caller may have been given the opportunity to determine that calls should be made simultaneously to more than one number and this multiple call identity is retrieved and simultaneous calls are caused to be set up by the network interface 20 of the service platform 8 to the network. This is indicated at step 604 where, if there are a number of groups which may be sequentially called, a relevant group is selected and at step 605 calls are established. All of the call out lines are monitored to determine whether there is an answer as indicated at step 606. On answer by one of the group then all of the other calls are dropped as indicated at step 607 and at step 608 the message recorded in the voice message store 25 is identified from the message location of the respective customer block 240 of the data store 24 by the PCU 22 and that message is transmitted by way of the network interface to the caller. This may now be transmitted at step 608 followed by a default message as indicated at step 609 which will be transmitted by the voice prompt and collect unit 23 under control of the PCU 22 and may be of the form "the above message was recorded by (LCI) at (time of recording), key 1 to acknowledge, key 2 to repeat or key 3 to refuse the request.".

The customer response at step 610 now determines whether the message is replayed at indicated by returning the caller to step 608 or whether the process ends as indicated at step 611 or whether a repeat of the alert function using other numbers is required.

If a multiple call function is not being used at step 603, time variant calls may be used where separate lists could be present for time of day or day of week, which is shown at step 612 where time variant listing is interrogated. If time variant listing is present then at step 613 the next appropriate number from the relevant time of day/day of week list is interrogated to determine the number to be called. If time variant and multiple call are not required then the system steps though to step 614 to select the next telephone number rot be called from the list associated with this particular alert. Having determined the required numbers call is set up as previously described through the network interface 21. This is shown at step 615. A timer may be established, for example of one minute maximum in which the called number may answer. At step 616, if an answer occurs then a customer message and default message are played as previously indicated at steps 608 and 609. if, prior to an answer being received as indicated at step 617, the timer expires then a check is made to determine whether there are further numbers in the appropriate list whether it is a grouped call list, a time variant list or a straightforward number list held in the appropriate block 240 of data store 24.

This is shown at step 618 where also the refusal or no response in respect of a group caller in step 610 occurs and provided there are more numbers the system will step through until all numbers associated with the particular alert have been exhausted.

Assuming that all of the numbers have been alerted then the emergency process 700 of Figure 7 is commenced, reference is made now also to Figure 7. Here, default details in respect of particular callers may be checked to determine whether there is in practice a customer default listing. The default details may be associated with the block 240 of the CLI and if a default centre has been previously nominated for the respect CLI a call is established at step 703 to the default centre. A timer is set to ensure that the call is answered at the default centre at indicated at step 704 and provided that an answer is received then at step 705 the default message and customer message are played in a similar manner to that before. The default centre is given the opportunity to key in a request for replay of the message as indicated at step 707 and if replay is requested the default and customer message are repeated. Once the default centre has accepted the call then the emergency process ends.

Returning now to the default centre answer condition as indicated at step u03, if the timer expires at indicated at step 708 prior to an answer being received, then the call may be routed to the emergency services operator and a default message and customer message played to enable the emergency services to react to the customer's perceived problem.

It will be noted that while no specific indication of usage has been given in the course of describing the above service, the system may find use, for example, in notifying the Coast Guard if a person as set sail from a predetermined destination. Thus, in the particular case the emergency service alert would be to a Coast Guard number or Lifeboat service number. Alternatively, Police or Ambulance or other appropriate service, for example Cave Rescue or Mine Rescue functions could be classified as an appropriate emergency operator.

While the system as hereinbefore described is based upon CLI, for example, other functions may be incorporated within the data block 240 of the data store 24. for example, GPS co-ordinates could be entered in the data store by a person taking part in, for example, caving, pot holing or similar activities.

The stored location in an alternative may be generated by triangulation of cellular co-ordinates if the initial call is established for example prior to entering a cave, pot hole or mine working using a mobile phone.

While the description hereinbefore is based upon traditional telephony networks such as a PSTN, it may be appropriate to transfer the invention to Internet type networks such that the set up of the call out message to be relayed etc could be configured from a web page, for example. The call up of the caller to the determine whether it is necessary to enter the alert state could be carried out use for short message service on a cell phone or by e-mail requiring a response within a predetermined period. Similarly, the alert to other parties may be by SMS, e-mail or other appropriate messaging means, for example, a pager.

In an alternative to a network-based service functionality of the service platform could be incorporated into home-based equipment but this may lead to inefficiencies in initiating call outs, particular, for example, if a mobile telephone is used where there is a risk of the transceiver being out of range of radio signal at the point at which help is required. Further in home-based CPE for example, there is a risk that customer activity disables the call out functionality as a result of a blown fuse or failure of software in a PC for example.

Use of CPE may offer some advantages in respect of inputting information to the system so that relevant data could be collected entered on to a screen in a predetermined format and then transmitted by e-mail, for example, to a central system to register call out requirements. Alternatively, transmission by way of the Internet to a predetermined service destination address may also be used.

## Claims

1. A telecommunication service in which responsive to a customer request from a first customer processing means collects and stores a customer message from the caller together with at least one preferred contact node and a call back time, said processing means contacting the originating customer at the specified call back time to provide a prompt to the customer and, in the absence of an appropriate response causing an alert communication to the or the first of the at least one preferred contact node and, on acknowledgement, delivering the stored customer message to the called node.

2. A telecommunications service as claimed in claim 1, in which the customer request is submitted by way of a telecommunications network (such as the PSTN).

3. A telecommunications service as claimed in claim 1, in which the customer request is submitted by way of an interactive data communication.

4. A telecommunications service as claimed in claim 3, in which the customer request and customer message are deposited by way of an interactive internet or intranet communications page.

5. A telecommunications service as claim in claim 3, in which the customer request and stored message is received by way of an e-mail communication.

6. A telecommunications service as claimed in any one of claims 1 to 5, in which the preferred contact node is a PSTN telephone number and in the absence of an appropriate response at the specified call back time a telephone call is placed to said preferred contact telephone number and on answer a voice message defining the stored customer message is transmitted.

7. A telecommunications service as claimed in any one of claims 1 to 5, in which the at least one preferred contact node defines a reception point for a data message, the service causing in the absence of an appropriate response a data message defining the alert to be transmitted to said data message reception point and to await reception of an acknowledgement before transmitting the stored customer message to the same message point.

8. A telecommunications service as claimed in any one of claims 1 to 5, in which the preferred contact node is an electronic mail address, in the absence of an appropriate response on prompting the first customer the system transmitting an e-mail message defining the stored customer message and looking for an acknowledgement of said message.

9. A telecommunications service as claimed in any preceding claim, in which a customer may store a default contact list in respect of any service request whereby on entry of anew customer request from a previously serviced customer a default contact list may be provided.

10. A telecommunications service as claimed in any preceding claim, in which a plurality of contact nodes are specified each of which is contacted in turn until an acknowledgement and an acceptable response are received.

11. A telecommunications service as claimed in claim 10, in which in the absence of a reply from the or each of the called contact nodes a call is established to an appropriate emergency service.

12. A telecommunications service as claimed in any preceding claim in which the stored customer message is supplemented on delivery with further information.

13. A telecommunications service as claimed in claim 12, in which the further information comprises the originating callers contact details.

14. A telecommunications service as claimed in claim 13, in which the supplemented information comprises a callers telephone number or other information derived therefrom.

15. A telecommunications service as claimed in claim 14, in which the derived information is locational information.

16. A telecommunications service as claimed in claim 15, in which the locational information comprises information determined by triangulation from a cellular transmission.
